# EUROPEAN PATENT SPECIFICATION

(11) **EP 2 140 921 B1**
(45) Date of publication and mention of the grant of the patent: **08.08.2012**
(21) Application number: 08252174.1
(22) Date of filing: 24.06.2008
(51) Int. Cl.: B01D 29/64

(54) **Method of using a filter for a fabric dyeing machine**
Verfahren zur Benutzung eines Filters für eine Fasernfärbemaschine
Procédé d'utilisation d'un filtre pour une machine de coloration de tissu

(43) Date of publication of application: 06.01.2010
(73) Proprietor: Falmer Investments Limited, Road Town, Tortola (VG)
(72) Inventor: Tsui, Tak Ming William, Hong Kong (HK)
(74) Representative: McGowan, Cathrine

(56) References cited:
- EP-A- 0 318 361
- WO-A-91/08035
- DE-A1- 19 752 364
- GB-A- 792 741
- US-A- 5 643 450

## Description

### BACKGROUND OF THE INVENTION

The present invention relates to a method of circulating lint within a flow path for dye liquor in a fabric dyeing machine using a filter..

Fabric is often dyed in continuous lengths which circulate around in a dyeing machine containing dye liquor. During the dyeing process, lint becomes detached from the fabric and accumulates in the liquor. Any narrow fluid channels within the machine, such as nozzle gaps, tend to collect the lint, and the flow area of the channel is reduced or completely blocked. Mechanical filters are commonly employed to address this problem. However, while such filters prevent the accumulation of lint in the nozzle gaps, the resulting accumulation of lint in the filter creates a pressure loss in the fluid circulation which reduces the liquor exchange between the dye and fabric. The filter thus has to be taken out of the machine for manual cleaning. Lint attached to the surface of the filter has to be removed, which can be difficult for long lengths of lint. These have to be broken down into smaller pieces using a metal brush before they can be removed from the filter. Filter cleaning is therefore time consuming, and decreases the efficiency and productivity of the dyeing process.

Consequently, there is a need for an improved filter for fabric dyeing machines.

### SUMMARY OF THE INVENTION

Accordingly, a first aspect of the present invention is directed to a method of circulating lint within a flow path for dye liquor in a fabric dyeing machine using a filter, the filter comprising a plate (5) having perforations for dye liquor to pass through; and at least one blade with a scraping edge , the blade movably mounted with respect to the plate; and the method comprising the steps of: placing the plate across the flow path for dye liquor in a dyeing machine, trapping at the plate lint that is too large to pass through the perforations, moving the scraping edge of the or each blade across the perforations in the plate and across any trapped lint, and breaking down the trapped lint into smaller pieces by the movement of the scraping edge across the lint until the smaller pieces can subsequently pass through the perforations and out of the filter with the dye liquor.

This provides a self-cleaning filter, in which the action of the scraping edge of the blade against the plate breaks up, by cutting and tearing, any long pieces of lint which have been trapped by the plate. This makes the lint pieces small enough to pass through the perforations in the plate, following which the lint can circulate freely with the dye liquor. The lint pieces are made small enough that they do not accumulate at any narrow channels or apertures in the dyeing machine, nor do they accumulate in the filter. Hence, neither the dye liquor flow path nor the filter become blocked. Operation of the machine is improved, since the dye liquor pressure is maintained, and the need for manual cleaning of the filter is reduced or eliminated.

A variety of configurations of the plate and the at least one blade are possible. For example, the plate may have a tubular shape, with the at least one blade mounted on a rotatable shaft coaxially positioned inside the tubular plate, whereby rotation of the shaft carries the scraping edge across the perforations. The blade(s) can rotate continually against the plate during operation of the dyeing machine.

Alternatively, the plate may be curved, with the at least one blade mounted on a rotatable shaft located at the centre of curvature of the plate, whereby rotation of the shaft carries the scraping edge across the perforations. The shaft can rotate back and forth through less than a full circle to sweep the scraping edge repeatedly over the plate. In a further alternative, the plate may be substantially flat. A blade positioned orthogonally to the plate and mounted for linear motion can be used with a plate of this type.

The at least one blade may be positioned upstream of the plate with respect to the direction of flow of the dye liquor. Most of the lint will collect against the upstream side of the plate, so this positioning is effective at breaking up the lint. A downstream blade may be also be useful, however.

At least one of the blades may have one or more apertures therein through which dye liquor may pass during movement of the blade. This helps to produce turbulence in the dye liquor, thereby reducing stagnation and distributed the lint more evenly across the plate.

The scraping edge may comprise a cutting edge. The requirement for a cutting action or a tearing action, and the sharpness of the edge, may be selected according to the toughness of the lint and its resistance to being torn or cut by the friction of the blade against the plate.

The filter may further comprise a vessel housing the plate and the at least one blade, the vessel having a fluid inlet and a fluid outlet for connection of the vessel into a dye liquor flow path of a dyeing machine such that connection of the vessel places the plate across the flow path. The vessel may have a window in a wall of the vessel through which the plate and/or the at least one blade can be observed. This allows for visual inspection for maintenance purposes without having to open the vessel or remove parts. Also, operation of the filter during flow of the dye liquor can be observed.

In some embodiments, the plate may be removable. It can be removed for occasional manual cleaning to supplement the self-cleaning provided by the moving blade, or for maintenance or replacement.

A second aspect of the invention is directed to a dyeing machine comprising a filter according to the first aspect.

### BRIEF DESCRIPTION OF THE DRAWINGS

For a better understanding of the invention and to show how the same may be carried into effect reference is now made by way of example to the accompanying drawings in which:
Figure 1 shows a cross-sectional side view of a filter according to an embodiment of the invention;
Figure 2 shows a cross-sectional view from above of the filter of Figure 1;
Figure 3 shows a cross-sectional view of a filter according to another embodiment; and
Figure 4 shows a cross-sectional view of a filter according to a further embodiment.

### DETAILED DESCRIPTION

The present invention proposes a method of circulating lint within a flow path for dye liquor in a fabric-dyeing machine using a self-cleaning filter to remove or reduce the requirement for manual filter cleaning.

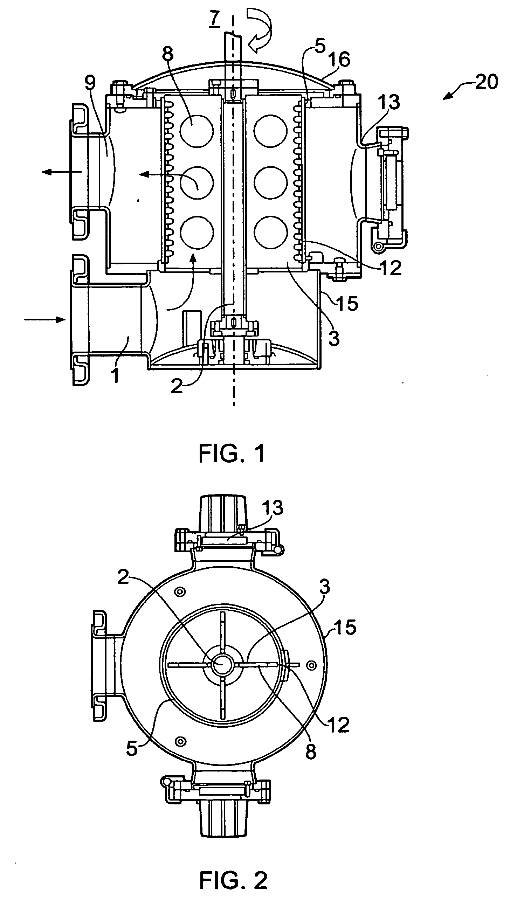

Figure 1 shows a cross-sectional side view of a filter used according to an embodiment of the invention. The filter 20 comprises a hollow vessel 15 housing various component parts to be described later. The vessel 15, which is generally cylindrical, is provided with a fluid inlet 1 in a lower part of its side wall and a fluid outlet 9 in an upper part of the side wall. The inlet 2 and the outlet 9 are arranged to be connected to pipework defining a dye liquor flow path in a fabric dyeing machine. Thus, dye liquor from the dyeing machine may enter the inlet 1, pass up through the central part of the vessel 15, and return to the dyeing machine through the outlet 9, as indicated by the arrows in Figure 1.

A rotatable shaft 2 is mounted vertically through the centre of the vessel 15. Suitable seals are provided at ends of the shaft to allow rotation of the shaft 2 with respect to the vessel while maintaining water-tightness to stop leakage of the dye liquor from the vessel. A motor 7 or similar driving mechanism is provided at an end of the shaft 2 to drive rotation of the shaft 2 about its longitudinal axis.

A filter plate 5 is coaxially mounted around the shaft 2. The plate 5 has a tubular shape, and the shaft runs along the centre axis of the tube defined by the plate 5, so that the plate and the shaft are coaxial along a vertical axis. The plate 5 has a plurality of perforations therein, through which dye liquor can pass. The inlet 1 is located below the lower end of the plate 5, so that dye liquor entering the vessel through the inlet 1 passes into the space inside the tube defined by the plate 5. The dye liquor then passes through the perforations in the plate 5 and reaches a volume of the vessel lying outside the plate 5, in which the outlet 9 is provided so that the dye liquor then leaves the vessel 15 via the outlet 9. The plate 5 therefore lies across the flow path of the dye liquor, and dye liquor circulating through the dyeing machine passes through the perforations in the filter plate 5.

In addition, one or more blades 3 are provided. In this embodiment, these are four substantially flat plates which are evenly spaced apart and mounted lengthwise along the rotatable shaft 2 such that the blades 3 radiate outwardly from the shaft 2. In this example, the blades have substantially the same length as the height of the tubular plate 5, and should preferably have a similar or greater extent in this direction than the region of the plate 5 in which the perforations are provided. In alternative embodiments, the blades may be curved rather than flat, and fewer or more than four may be used.

The blades 3 have a width such that they extend from the shaft 2 to the inner surface of the plate 5. Thus, rotation of the shaft carries the outer edge 12 of the blades (the edge remote from the shaft) over the surface of the plate 5. The outer edges 12 are configured as scraping edges, to scrape the surface of the plate 5, and may further be cutting edges.

Also, the blades 3 are provided with one or more holes or apertures 8. As the shaft 2 and the blades 3 rotate, the dye liquor in the vessel can pass through the apertures 8, so that movement of the blades through the dye liquor is facilitated.

On occasion it may be necessary to remove one or more parts of the filter 20 from the vessel 15. For this purpose, the vessel 15 is provided with a lid or similar sealed closure 16 at its upper end, which may be opened to provide access to the interior of the vessel 15 and the components therein. The components, in particular the filter plate 5, the blades 3 and the shaft 2, may be removably mounted inside the vessel 15 so that they can taken out through the lid 16 if and when necessary for maintenance or replacement.

Also, a window 13, comprising an aperture glazed with glass or another transparent material, may be provided in the side wall of the vessel 15, through which the components and operation of the filter may be observed. This allows problems to be noted, which may for example be remedied by accessing the interior of the vessel 15 by means of the lid 16. Alternatively or additionally, a window may be provided in the top or bottom wall of the vessel, or there may be no window.

Figure 2 shows a cross-sectional view of the filter 20 from above. The tubular shape of the filter plate 5, the coaxial arrangement of the shaft 2 and the plate 5, and the regular radial arrangement of the blades 3 on the shaft 2 can be seen.

In operation, dye liquor circulating around the dyeing machine to which the vessel 15 is coupled enters the vessel 15 through the inlet 1, passes up inside the space defined by the plate 5, flows through the perforations in the plate 5, and returns to the machine by the outlet 9. The dye liquor carries lint from the fabric being treated in the machine, and any lint which is larger in size than the perforations in the plate 5 is trapped against the inner surface of the plate 5 as the dye liquor flows through the perforations. By suitable selection of the perforations with respect to typical lint sizes and to the dimensions of any narrow channels or apertures in the dye liquor flow path through the dyeing machine (so that the perforations are not bigger than the channels and apertures), any lint which would potentially block the narrow channels is removed from the flow path by the filter plate.

As the dye liquor is flowing, the motor 7 is operated to rotate the shaft 2 and thereby carry the scraping edges 12 of the blades 3 across the inner surface of the plate 5. The contact between the blades 3 and the plate 5 loosens any trapped lint, and any trapped pieces which are too big to then pass through the perforations are cut and/or torn by the action of the scraping or cutting edges 12 of the blades 3. The lint is thus reduced to smaller pieces which can pass through the perforations and out of the filter. Continuous rotation of the shaft gives multiple passes of the blade edges over every region of the perforations, so that any long piece of lint should eventually be broken down sufficiently to be carried through the perforations by the flow of dye liquor. In this way, the accumulation of lint inside the filter is avoided, or at least reduced, so the filter plate does not need to be removed for cleaning, or can be cleaned less frequently than a conventional filter without a self-cleaning mechanism. Any lint then circulating with the dye liquor is small enough to not be trapped in either the filter perforations or any narrow channels in the flow path.

The movement of the blades 3 creates turbulence in the dye liquor flowing through the filter 20. The apertures 8 in the blades 3 assist in creating turbulence. Stagnant flow can arise in the absence of turbulence, which can produce a concentration of lint on specific regions of the filter plate 5. This makes the filtering process less efficient. Therefore, turbulence is provided to improve flow distribution and even allocation of lint across the surface of the filter.

Although in this embodiment, the blades 3 are rectangular and occupy substantially the full cross-sectional area of the space inside the tubular plate 5, this is not essential. At one end the blades require to be fastened to the rotating shaft 2, while at the other end the scraping edge preferably passes across the full extent of the perforated region of the plate 5 (otherwise there will be perforations which are not cleaned and which will therefore become blocked with lint). Any blade shape and size with these properties may be employed. The shaft end and the scraping edge do not need to have the same dimensions. Further, blade shapes which do not occupy all the cross-sectional area of the vessel are suitable for omission of the apertures 8, because turbulence will be created as the dye liquor flows over the upper and/or lower edges of the turning blade.

Figure 1 shows the vessel and filter arranged such that the axis of the shaft 2 and the filter plate 5 is vertical. Other positions of the axis may be employed as appropriate for convenient coupling with a dyeing machine, however.

Also, the invention is not limited to the configuration of filter plate and blades shown in Figures 1 and 2. Any arrangement in which a filter plate can be placed across the dye liquor flow path and have an associated movable blade which scrapes its surface for cleaning can be utilised. In general, lint will accumulate mainly on the upstream side of the filter plate, so it is advantageous for the movable blade to scrape this side of the plate. However, one or more blades which alternatively or additionally act on the downstream side of the filter plate are not precluded. A blade in this position can cut lint pieces trapped by the plate such that the lint sticks through a perforation onto the downstream side.

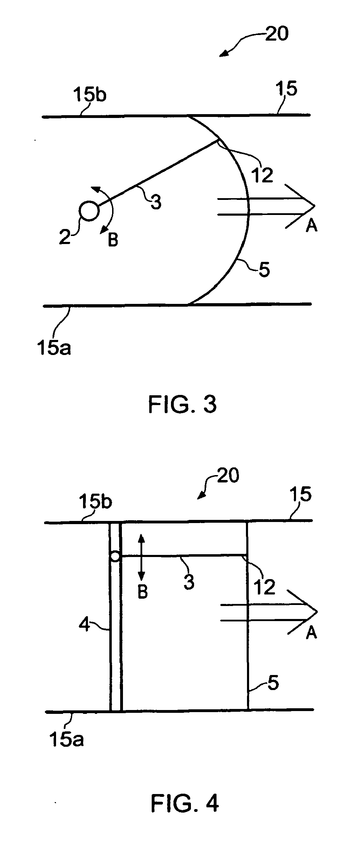

Figure 3 shows a cross-sectional view of an alternative embodiment of a filter. In this embodiment, the vessel 15 has side walls 15a, 15b which define a flow path for the dye liquor, indicated by the arrow A. The filter plate 5 is placed across the vessel 15 extending from one side wall to the other so that all dye liquor flowing through the vessel 15 passes through the perforations in the filter plate 5. The filter plate has a curved shape, with the concave side of the curve being upstream with respect to the dye liquor flow direction.

As in the first embodiment, a rotatable shaft 2 carries a blade 3 (only one blade is shown but more may be used if desired). The shaft is placed at the centre of curvature of the plate 5. The blade extends from the shaft 2 towards the plate 5 along a radius of curvature of the plate such that the edge of the blade 3 remote from the shaft 2, being the scraping edge 12, is carried across the surface of the plate 5 when the shaft rotates. Rather than rotating through 360°, the shaft rotates back and forth through a smaller angle sufficient to sweep the scraping edge 12 repeatedly over as much of the plate 5 as is provided with perforations, as indicated by the arrow B. Contact between the scraping edge 12 and the plate 5 tears and cuts any lint caught by the plate until it is small enough to pass through the perforations in the plate.

The embodiment of Figure 3 can be considered as a reduced version of the embodiment of Figures 1 and 2, in that the plate forms part of the curved wall of a tube and the blade sweeps over an angle less that 360°, instead of the fully tubular plate and completely circular rotation of the blade in the previous embodiment.

Figure 4 shows a cross-sectional view of a further embodiment. As in Figure 3, the vessel 15 has side walls 15a, 15b defining the dye liquor flow path. In this embodiment, the filter plate 5, again placed between the walls so that the dye liquor flows through the perforations, is flat instead of curved. A blade 3 is moveably mounted on the upstream side of the plate 5 such that its scraping edge 12 can be carried back and forth over the surface of the plate to break down trapped lint, as indicated by the arrow B. A rail 4 is mounted across the vessel upstream of the plate 5, and the blade 3 is arranged to slide along the rail 4 in a direction parallel to the plate 5 so that the necessary linear movement of the blade 3 is provided. A motor or other driving mechanism (not shown) is provided to drive the blade along the rail 4. Alternative mounting and moving arrangements for the blade may be used instead, and more than one blade can be employed.

Other arrangements, shapes and configurations of the filter plate and one or more blades which provide the required functionality can be envisaged, and will be evident to the skilled person.

## Claims

1. A method of circulating lint within a flow path for dye liquor in a fabric dyeing machine using a filter (20), the filter comprising:
a plate (5) having perforations for dye liquor to pass through; and
at least one blade (3) with a scraping edge (12), the blade movably mounted with respect to the plate;
and the method comprising the steps of:
placing the plate across the flow path for dye liquor in a dyeing machine;
trapping at the plate lint that is too large to pass through the perforations;
moving the scraping edge of the or each blade across the perforations in the plate and across any trapped lint; and
breaking down the trapped lint into smaller pieces by the movement of the scraping edge across the lint until the smaller pieces can subsequently pass through the perforations and out of the filter with the dye liquor.

2. A method according to claim 1, in which the plate has a tubular shape, and the at least one blade is mounted on a rotatable shaft (2) coaxially positioned inside the tubular plate, whereby rotation of the shaft carries the scraping edge across the perforations.

3. A method according to claim 1, in which the plate is curved, and the at least one blade is mounted on a rotatable shaft (2) located at the centre of curvature of the plate, whereby rotation of the shaft carries the scraping edge across the perforations.

4. A method according to claim 1, in which the plate is substantially flat.

5. A method according to claim 1, in which the at least one blade is positioned upstream of the plate with respect to the direction of flow of the dye liquor.

6. A method according to any one of claims 1 to 5, in which at least one of the blades has one or more apertures (8) therein through which dye liquor may pass during movement of the blade.

7. A method according to any one of the preceding claims, in which the scraping edge comprises a cutting edge.

8. A method according to any one of the preceding claims, in which the filter further comprises a vessel (15) housing the plate and the at least one blade, the vessel having a fluid inlet (1) and a fluid outlet (9) for connection of the vessel into a dye liquor flow path of a dyeing machine such that connection of the vessel places the plate across the flow path.

9. A method according to claim 8, in which the filter further comprises a window (13) in a wall of the vessel through which the plate and/or the at least one blade can be observed.

10. A method according to any one of the preceding claims, in which the plate is removable.

## Patentansprüche

1. Verfahren zum Umwälzen von Flusen innerhalb eines Flusspfades für Farbstoffflüssigkeit in einer Faserfärbemaschine, wobei ein Filter (20) verwendet wird, wobei das Filter aufweist:
ein Blech (5) mit Perforationen für einen Durchgang von Farbstoffflüssigkeit und
mindestens eine Rakel (3) mit einer Schabekante (12), wobei die Rakel relativ zu dem Blech bewegbar befestigt ist,
und das Verfahren die Schritte aufweist:
Anordnen des Blechs quer zum Flusspfad für Farbstoffflüssigkeit in einer Färbemaschine,
Einfangen einer Fluse an dem Blech, die zu groß ist, um durch die Perforationen zu gelangen,
Bewegen der Schabekante der oder jeder Rakel über die Perforationen in dem Blech und über jede eingefangene Fluse und
Zerbrechen der eingefangenen Fluse in kleinere Teile durch die Bewegungen der Schabekante über die Fluse bis die kleineren Teile nachfolgend mit der Farbstoffflüssigkeit durch die Perforationen und aus dem Filter treten können.

2. Verfahren nach Anspruch 1, wobei das Blech eine rohrförmige Form aufweist und die mindestens eine Rakel auf einer drehbaren Achse (2) befestigt ist, die koaxial in dem rohrförmigen Blech angeordnet ist, wobei eine Drehung der Achse die Schabekante über die Perforationen führt.

3. Verfahren nach Anspruch 1, wobei das Blech gekrümmt ist und die mindestens eine Rakel auf einer drehbaren Achse befestigt ist, die in dem Krümmungsmittelpunkt des Blechs angeordnet ist, wobei eine Drehung der Achse die Schabekante über die Perforationen führt.

4. Verfahren nach Anspruch 1, wobei das Blech im Wesentlichen eben ist.

5. Verfahren nach Anspruch 1, wobei die mindestens eine Rakel stromaufwärts von dem Blech relativ zu der Flussrichtung der Farbstoffflüssigkeit angeordnet ist.

6. Verfahren nach einem der Ansprüche 1 bis 5, wobei mindestens eine der Rakeln eine oder mehrere Öffnungen (8) darin aufweist, durch die während einer Bewegung der Rakel Farbstoffflüssigkeit treten kann.

7. Verfahren nach einem der vorhergehenden Ansprüche, wobei die Schabekante eine Schneidkante aufweist.

8. Verfahren nach einem der vorhergehenden Ansprüche, wobei das Filter darüber hinaus einen Behälter (15) aufweist, der das Blech und die mindestens eine Rakel aufnimmt, wobei der Behälter einen Fluideinlass (1) und einen Fluidauslass (9) zur Einbindung des Behälters in einen Farbstoffflüssigkeitsflusspfad einer Färbemaschine aufweist, sodass eine Verbindung des Behälters das Blech quer zum Flusspfad anordnet.

9. Verfahren nach Anspruch 8, wobei das Filter darüber hinaus ein Fenster (13) in einer Wand des Behälters aufweist, durch welches das Blech und/oder die mindestens eine Rakel beobachtet werden können.

10. Verfahren nach einem der vorhergehenden Ansprüche, wobei das Blech entfernbar ist.

## Revendications

1. Procédé de circulation de peluche dans une voie d'écoulement pour un bain de teinture dans une machine de coloration de tissu en utilisant un filtre (20), le filtre comprenant :
une plaque (5) présentant des perforations pour que le bain de teinture passe au travers ; et
au moins une lame (3) avec une arête de raclage (12), la lame étant montée de manière mobile par rapport à la plaque ;
et le procédé comprenant les étapes suivantes :
placer la plaque au travers de la voie d'écoulement pour le bain de teinture dans une machine de coloration ;
piéger sur la plaque la peluche trop grande pour passer au travers des perforations ;
déplacer l'arête de raclage de la ou de chaque lame sur les perforations dans la plaque et toute peluche piégée ; et
éclater la peluche piégée en de plus petits morceaux par le mouvement de l'arête de raclage sur la peluche jusqu'à ce que les plus petits morceaux puissent passer ultérieurement au travers des perforations et hors du filtre avec le bain de teinture.

2. Procédé selon la revendication 1, dans lequel la plaque présente une forme tubulaire, et au moins une lame est montée sur un arbre rotatif (2) positionné coaxialement dans la plaque tubulaire, moyennant quoi la rotation de l'arbre porte l'arête de raclage sur les perforations.

3. Procédé selon la revendication 1, dans lequel la plaque est courbée, et au moins une lame est montée sur un arbre rotatif (2) situé au centre de la courbure de la plaque, moyennant quoi la rotation de l'arbre porte l'arête de raclage sur les perforations.

4. Procédé selon la revendication 1, dans lequel la plaque est sensiblement plate.

5. Procédé selon la revendication 1, dans lequel au moins une lame est positionnée en amont de la plaque par rapport à la direction d'écoulement du bain de teinture.

6. Procédé selon l'une quelconque des revendications 1 à 5, dans lequel au moins l'une des lames présente une ou plusieurs ouvertures (8), par laquelle/lesquelles le bain de teinture peut passer pendant le mouvement de la lame.

7. Procédé selon l'une quelconque des revendications précédentes, dans lequel l'arête de raclage comprend une arête de coupe.

8. Procédé selon l'une quelconque des revendications précédentes, dans lequel le filtre comprend en outre une cuve (15) logeant la plaque et au moins une lame, la cuve présentant une entrée de fluide (1) et une sortie de fluide (9) pour la liaison du récipient dans une voie d'écoulement de bain de teinture d'une machine de coloration de sorte que la liaison de la cuve place la plaque au travers de la voie d'écoulement.

9. Procédé selon la revendication 8, dans lequel le filtre comprend en outre une fenêtre (13) dans une paroi du récipient, au travers de laquelle la plaque et/ou au moins une lame peut être observée.

10. Procédé selon l'une quelconque des revendications précédentes, dans lequel la plaque est amovible.
